# EUROPEAN PATENT APPLICATION

(11) **EP 4 044 008 A1**
(43) Date of publication of application: **17.08.2022**
(21) Application number: 20886600.4
(22) Date of filing: 06.11.2020
(51) Int. Cl.: G06F 3/041

(54) **TARGET OBJECT DISPLAY METHOD AND APPARATUS, ELECTRONIC DEVICE, AND COMPUTER-READABLE MEDIUM**

(30) Priority: 13.11.2019 CN 201911105281
(71) Applicant: BEIJING BYTEDANCE NETWORK TECHNOLOGY CO., LTD., Beijing 100041 (CN)
(72) Inventor: XIAO, Junpeng, Beijing 100190 (CN); YU, Huijun, Beijing 100190 (CN)
(74) Representative: Dentons UK and Middle East LLP
(86) International application number: PCT/CN2020/127257
(87) International publication number: WO 2021/093688

(57) **Abstract**

A target object display method and apparatus, an electronic device, and a computer-readable medium. Said method comprises: displaying a page, the page comprising a touch region and at least one non-touch region adjacent to the touch region (201), the at least one non-touch region not responding to a preset touch operation, and the touch region being used for displaying a target object; and in response to the detection of the touch operation in the touch region, displaying the target object in the touch region in a first preset pattern (202). The present invention prevents a user from triggering irrelevant functions or effects, improves the accuracy of operation, and enhances the interactivity during operation.

## Description

This disclosure claims the priority to the Chinese patent application No. 201911105281.6 filed with the Chinese Patent Office on November 13, 2019 and entitled "TARGET OBJECT DISPLAY METHOD AND APPARATUS, ELECTRONIC DEVICE, AND COMPUTER-READABLE MEDIUM", the entirety of which is hereby incorporated by reference into the present disclosure.

### TECHNICAL FIELD

Embodiments of the present disclosure relate to the field of computer technologies, and particularly, to a target object display method and apparatus, an electronic device, and a computer-readable medium.

### BACKGROUND

Continuous popularization of electronic devices has greatly facilitated people' s lives . People can have a variety of entertainment activities such as playing movies, playing music, watching live stream and the like through all kinds of electronic devices exemplified by smart phones.

### SUMMARY

The "SUMMARY" is provided to introduce concepts in a simplified form, which will be described in detail below in the following "DETAILED DESCRIPTION OF THE DRAWINGS". The "SUMMARY" is not intended to identify key features or essential features of the claimed technical solutions, nor is it intended to limit the scope of the claimed technical solutions.

In some embodiments of the present disclosure, there are provided a target object display method and apparatus, an electronic device, and a computer-readable medium.

In a first aspect, in some embodiments of the present disclosure, there is provided a target object display method, comprising: displaying a page in which a touch area and at least one non-touch area adjacent to the touch area are comprised, wherein the at least one non-touch area does not respond to a preset touch operation, and the touch area is used for displaying a target object; and in response to detecting a touch operation in the touch area, displaying the target object in the touch area in a first preset style.

In a second aspect, in some embodiments of the present disclosure, there is provided a target object display apparatus, comprising: a display unit configured to display a page in which a touch area and at least one non-touch area adjacent to the touch area are comprised, wherein the at least one non-touch area does not respond to a preset touch operation, and the touch area is used for displaying a target object; and the display unit further configured to display, in response to detecting a touch operation in the touch area, the target object in the touch area in a first preset style.

In a third aspect, in some embodiments of the present disclosure, there is provided an electronic device, comprising: one or more processors; and a storage device having thereon stored one or more programs which, when executed by one or more processors, cause the one or more processors to implement the method as described in any of implementations in the first aspect.

In a fourth aspect, in some embodiments of the present disclosure, there is provided a computer-readable medium having thereon stored a computer program, wherein the program, when executed by a processor, implements the method as described in any of the implementations in the first aspect.

In a fifth aspect, in the embodiments of the present disclosure, there is provided a computer program product, comprising a computer program which, when executed, is used for implementing the target object display method provided in the embodiments of the present disclosure.

According to the target object display method and apparatus, electronic device, and computer-readable medium provided in some embodiments of the present disclosure, a page can be displayed, in which a touch area and a non-touch area are comprised. In practice, when an operation performed by a user in the touch area, a mistaken touch may be made by the user onto a nearby area, resulting in triggering an irrelevant function or effect. However, in some embodiments of the present disclosure, the non-touch area adjacent to the touch area is provided, and the non-touch area does not respond to the preset touch operation, so that the user is avoided from triggering an irrelevant function or effect, and operation accuracy is improved. In addition, the target object is displayed in a first preset style, so that the target object can be effectively distinguished from a target object in another style, and therefore, the user can be effectively prompted, and interactivity during the operation is enhanced.

### BRIEF DESCRIPTION OF THE DRAWINGS

The above and other features, advantages, and aspects of various embodiments of the present disclosure will become more apparent in conjunction with the accompanying drawings and with reference to the following "DETAILED DESCRIPTION". Throughout the drawings, identical or similar reference numbers refer to identical or similar elements. It should be understood that the drawings are schematic and that components and elements are not necessarily drawn to scale.
Fig. 1 is a schematic diagram of one application scenario of a target object display method according to some embodiments of the present disclosure;
Fig. 2 is a flow diagram of a target object display method according to some embodiments of the present disclosure;
Fig. 3 is a flow diagram of a target object display method according to other embodiments of the present disclosure;
Fig. 4 is an exemplary schematic diagram of the first preset style according to the present disclosure;
Fig. 5 is a schematic structural diagram of a target object display apparatus according to some embodiments of the present disclosure;
Fig. 6 is a schematic structural diagram of an electronic device suitable for implementing some embodiments of the present disclosure;
Fig. 7 is an exemplary schematic diagram of the second preset style according to the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure can be implemented in various forms and should not be construed as limited to the embodiments set forth herein. Rather, these embodiments are provided for a more thorough and complete understanding of this disclosure. It should be understood that the drawings and the embodiments of the present disclosure are for exemplary purposes only and are not intended to limit the protection scope of the present disclosure.

In addition, it should also be noted that, for easy of description, only portions related to the present invention are shown in the drawings. The embodiments in the present disclosure and features in the embodiments can be combined with each other without conflict.

It should be noted that concepts of "first", "second", and the like mentioned in the present disclosure are only used for distinguishing different devices, modules or units, and are not used for limiting the order or interdependence of functions performed by these devices, modules or units.

It should be noted that modifications of "one" or "plurality" mentioned in this disclosure are intended to be illustrative rather than restrictive, and that those skilled in the art should appreciate that they should be understood as "one or more" unless otherwise clearly indicated in the context.

Names of messages or information exchanged between a plurality of devices in the embodiments of the present disclosure are for illustrative purposes only, and are not intended to limit the scope of these messages or information.

The present disclosure will be described in detail below with reference to the accompanying drawings and in conjunction with the embodiments.

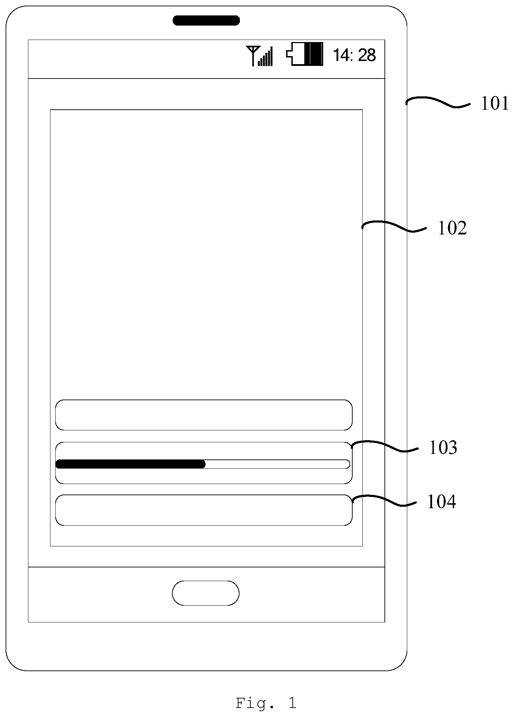

Fig. 1 shows a schematic diagram of one application scenario in which a target object display method according to some embodiments of the present disclosure can be applied.

The target object display method provided by some embodiments of the present disclosure can be performed by a terminal device, or by a server.

It should be noted that the terminal device can be hardware or software. When the terminal device is hardware, the terminal device can be various electronic devices having a display screen and supporting a touch operation, comprising but not limited to a smartphone, a tablet computer, an eBook reader, a vehicle-mounted device, a wearable device, and the like. When the terminal device is software, it can be installed in the electronic devices listed above. It can be implemented as, for example, multiple software or software modules for providing distributed services, or as a single software or software module. No specific limitation is made herein.

The server can also be hardware or software. When the server is hardware, it can be implemented as a distributed server cluster composed of multiple servers, or as a single server. When the server is software, it can be implemented as , for example, multiple software or software modules for providing distributed services, or as a single software or software module. No specific limitation is made herein.

In an application scenario shown in Fig. 1, an execution subject of the target object display method can be various applications installed on a smartphone 101. Taking a live video application as an example, in a process of using the live video application, as shown in the figure, the live video application can display a video playing page 102 on the smartphone 101. In the video playing page 102, a touch area 103 and two non-touch areas 104 adjacent to the touch area 103 are comprised. The two non-touch areas 104 do not respond to a preset touch operation. As shown in the figure, an example that a progress bar for adjusting a video playing progress is displayed in the touch area 103 is taken. When a user wants to adjust the video playing progress, the user can swipe in the touch area 103. However, in the actual page, the touch area 103 has no obvious boundary with other areas, and the user cannot intuitively distinguish an actual range of the touch area 103. To say the least, even if the user is enabled to distinguish the touch area 103 from the other areas through user interface design, since a finger, a stylus, and the like all have a certain width and factors such as a width of the touch area 103 are considered, when the user performs an operation in the touch area 103, the user quite possibly makes a mistaken touch onto a nearby area, resulting in triggering an irrelevant function or effect.

Therefore, the non-touch area 104 adjacent to the touch area is provided, which is, in Fig. 1, exemplified with two non-touch areas 104, and the non-touch area does not respond to the preset touch operation, so that the user is avoided from triggering an irrelevant function or effect, and operation accuracy is improved.

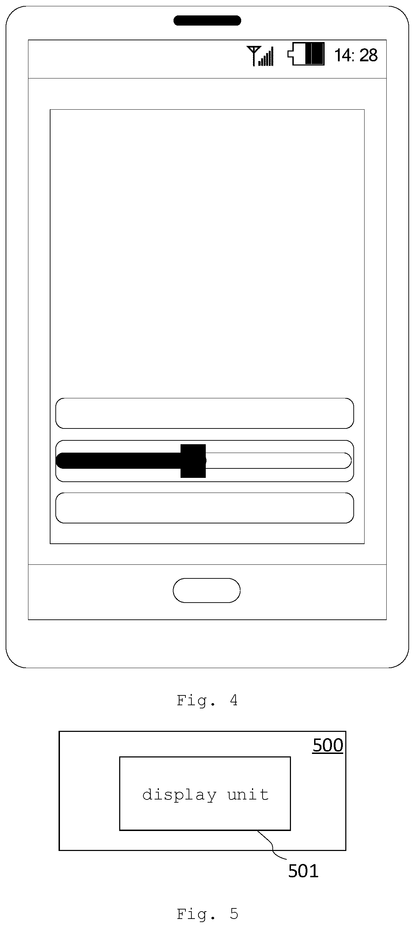

On the basis of this, in response to detecting a touch operation in the touch area, the target object is displayed in the touch area in a first preset style. Continually taking the example that the progress bar for adjusting the video playing progress is displayed in the touch area 103, in response to detecting the touch operation in the touch area, as shown in Fig. 4, the first preset style can be a more striking display style, which can be, for example, a style with a thicker line and a drag block.

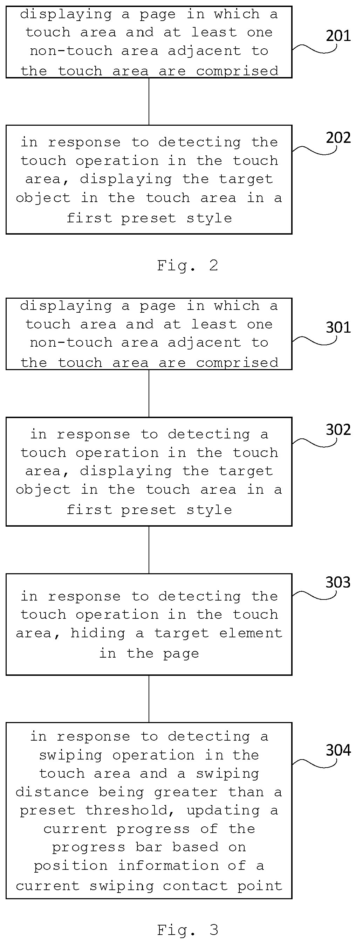

Reference can be made continually to Fig. 2, which shows a flow 200 of a target object display method according to some embodiments of the present disclosure. The target object display method comprises:
step 201, displaying a page in which a touch area and at least one non-touch area adjacent to the touch area are comprised.

In some embodiments, the execution subject of the target object display method can display a page in which a touch area and at least one non-touch area adjacent to the touch area are comprised.

The page can be various pages. As an example, it can be an electronic device's own system interface, or can be a page of an application installed on the electronic device, or the like. The page can be a page for realizing various functions, as needed. Any limitation is not made in the present disclosure in this regard. The touch area supports the user's touch through a finger or other medium to realize interaction with the device or application. The touch area can be used for displaying the target object. The target object can be a wide variety of objects according to different functions realized. For example, the touch area can be used for displaying a progress bar, and the user can realize the adjustment of a video playing progress by dragging the progress bar. For another example, the touch area is used for displaying a comment box, and the user can input comments by clicking to expand the comment box. In practice, the function realized by the touch area can be determined according to actual needs.

In some embodiments, the at least one non-touch area adjacent to the touch area is comprised in the page. The at least one non-touch area does not respond to the preset touch operation. In practice, as an example, a touch operation of the user in the non-touch area can be monitored. In response to monitoring the touch operation, the touch operation is intercepted. And a shape, number and size of the non-touch area can be set according to actual needs, which are not limited in this application. As an example, one non-touch area can be provided above and below the touch area, respectively. As an example, an annular non-touch area can be provided around the touch area, and so on.

It should be noted that a position relation between the non-touch area and the touch area can be adjacent. According to implementation needs, there can be no gap or a certain gap between the non-touch area and the touch area. No limitation is made in this disclosure in this regard.

Step 202, in response to detecting the touch operation in the touch area, displaying the target object in the touch area in a first preset style.

In some embodiments, the above execution subject can detect the touch operation in the touch area. According to actual needs, the touch operation can be various operations, comprising but not limited to: clicking, swiping, double-clicking, dragging, etc. The touch operation can be detected through an interface provided by an operating system, functions provided by some application development tools, and the like. In response to detecting the touch operation in the touch area, the target object is displayed in the touch area in the first preset style. The first preset style can be any style different from a previous display style of the target object according to actual needs. As an example, as shown in Fig. 4, when the displayed target object is the progress bar, the first preset style can be a more striking display style, which can be, for example, a style with a thicker line and a drag block.

In some optional implementations, the target object is the progress bar; and the method further comprises: in response to detecting a swiping operation in the touch area and a swiping distance being greater than a preset threshold, updating a current progress of the progress bar based on position information of a current swiping contact point.

According to the target object display method provided in some embodiments of the present disclosure, the non-touch area adjacent to the touch area is displayed, and the non-touch area does not respond to the preset touch operation, so that the user is avoided from triggering an irrelevant function or effect and operation accuracy is improved. In addition, the target object is displayed in the first preset style, so that the target object can be effectively distinguished from a target object in another style, and therefore, the user can be effectively prompted, and interactivity during the operation is enhanced.

Further reference is made to Fig. 3, which shows a flow 300 of a target object display method according to other embodiments of the present disclosure. The target object display method comprises:
step 301, displaying a page in which a touch area and at least one non-touch area adjacent to the touch area are comprised. The touch area can be used for displaying a progress bar;
step 302, in response to detecting a touch operation in the touch area, displaying the target object in the touch area in a first preset style.

In some embodiments, for specific implementations of the steps 301 to 302 and their technical effect, reference can be made to those embodiments corresponding to Fig. 2, which are not repeated herein.

Step 303, in response to detecting the touch operation in the touch area, hiding a target element in the page.

In some embodiments, in response to detecting the touch operation in the touch area, the above execution subject can hide the target element in the page. The element in the page can comprise an element displayed in an area that is in the page and outside the touch area and the non-touch area, comprising but not limited to: a top navigation bar, a page sidebar, a comment box, etc. In practice, as an example, these elements can be implemented through interactive controls. The target element is hid, so that the user can be further effectively prompted, and interactivity during the operation is enhanced.

Step 304, in response to detecting a swiping operation in the touch area and a swiping distance being greater than a preset threshold, updating a current progress of the progress bar based on position information of a current swiping contact point.

In some embodiments, when the target object is the progress bar, the execution subject of the target object display method can, in response to detecting the swiping operation in the touch area and the swiping distance being greater than the preset threshold, update the current progress of the progress bar based on the position information of the current swiping contact point.

The swiping distance is generally smaller when the user makes a mistaken touch. By comparing the swiping distance with the preset threshold, unnecessary video progress adjustment can be avoided when the user makes the mistaken touch (for example, clicking operation with a bigger action). In addition, compared with the updating of the current progress based on the swiping distance, the updating of the position information based on the current swiping contact point can make the video progress adjustment more accurate, and the video progress adjustment can be realized within a range of the whole progress bar.

The position information of the current swiping point can be used for indicating a position of a contact point of the touch medium such as a finger with the screen. As an example, the current progress can be updated to a progress corresponding to an abscissa of the current contact point.

In some optional implementations, in response to detecting an end of the swiping operation, the target element can be displayed and the target object can be displayed in the touch area in a second preset style.

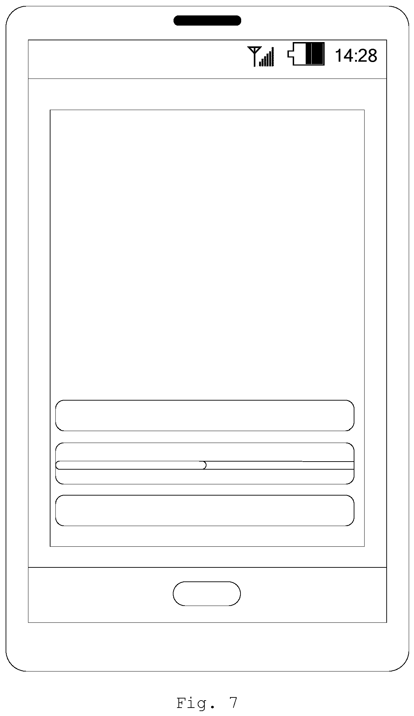

In these implementations, the second preset style can be a different style from the first preset style. As an example, the second preset style can be a display style of the progress bar prior to the progress adjustment. Of course, according to actual needs, the second preset style is also a display style different from the previous display style of the progress bar. Therefore, the end of the swiping progress adjustment can be effectively prompted and the operation interactivity is further enhanced. As an example, as shown in Fig. 7, the second preset style can be a style with stronger integration with the background and less sense of presence. For example, it is a display style with a thin progress bar, without a sliding block but only with a borderline.

In some optional implementations, a video playing area is comprised in the page; the above method can further comprise: in response to detecting a preset operation in the video playing area, displaying the target object in the touch area in the first preset style. The preset operation in the video playing area is detected, so that a use habit of the user can be considered, an intention of the user is effectively identified, and convenience of use is enhanced.

In some optional implementations, a tab switching control is further comprised in the page, and the progress bar has a higher priority level than the tab switching control, such that the operation for the progress bar is preferentially responded, and thus the progress adjustment is more accurate and quicker.

Further referring to Fig. 5, as an implementation of the methods shown in the above figures, the present disclosure provides some embodiments of a target object display apparatus, wherein these apparatus embodiments correspond to those method embodiments shown in Fig. 2, and the apparatus can be specifically applied to various electronic devices.

As shown in Fig. 5, the target object display apparatus 500 of some embodiments comprises: a display unit 501. The display unit 501 is configured to display a page in which a touch area and at least one non-touch area adjacent to the touch area are comprised, wherein the at least one non-touch area does not respond to a preset touch operation, and the touch area is used for displaying a target object. Further, the display unit 501 is also configured to display, in response to detecting the touch operation in the touch area, the target object in the touch area in a first preset style.

In some embodiments, for a specific implementation of a first display unit 501 in a webpage generation apparatus 500 and its technical effects, reference can be made to the embodiment corresponding to Fig. 2, which is not repeated herein.

In some optional implementations, the apparatus 500 further comprises: an element hiding unit (not shown in the figure). The element hiding unit is configured to hide, in response to detecting the touch operation in the touch area, a target element in the page.

In some optional implementations, the target object is a progress bar; and the apparatus 500 further comprises: an updating unit (not shown in the figure). The updating unit is configured to update, in response to detecting a swiping operation in the touch area and a swiping distance being greater than a preset threshold, a current progress of the progress bar based on position information of a current swiping contact point.

In some optional implementations, a video playing area is comprised in the page, and the display unit 501 is further configured to display, in response to detecting a preset operation in the video playing area, the target object in the touch area in the first preset style.

In some optional implementations, a tab switching control is further comprised in the page, and the progress bar has a higher priority level than the tab switching control.

In some embodiments, the non-touch area adjacent to the touch area is displayed, and the non-touch area does not respond to the preset touch operation, so that the user is avoided from triggering an irrelevant function or effect, and operation accuracy is improved. In addition, the target object is displayed in the first preset style, so that the target object can be effectively distinguished from a target object in another style, and therefore, the user can be effectively prompted, and interactivity during the operation is enhanced.

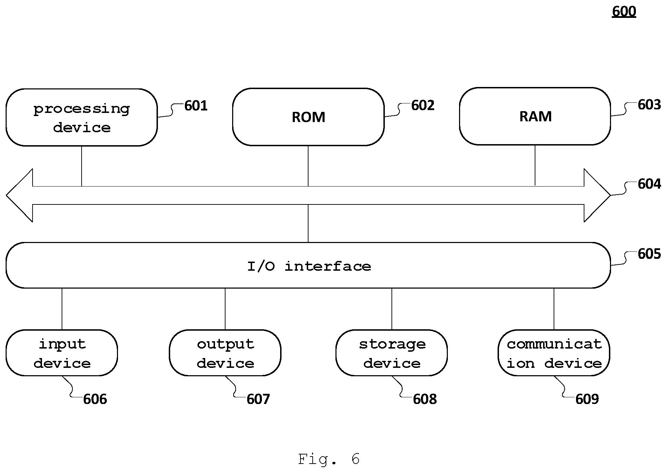

Reference is made below to Fig. 6, which shows a schematic structural diagram of an electronic device 600 suitable for implementing some embodiments of the present disclosure. A terminal device in some embodiments of the present disclosure can comprise, but is not limited to, a mobile terminal such as a mobile phone, a notebook computer, a digital broadcast receiver, a PDA (Personal Digital Assistant), a PAD (tablet computer), a PMP (Portable Multimedia Player), a vehicle-mounted terminal (for example, a vehicle-mounted navigation terminal), and the like, and a fixed terminal such as a digital TV, a desktop computer, and the like. The terminal device shown in Fig. 6 is only one example, and should not bring any limitation to the functions and the use range of the embodiments of the present disclosure.

As shown in Fig. 6, the electronic device 600 can comprise a processing device (for example, a central processing unit, a graphics processor, etc.) 601 that can perform various appropriate actions and processing according to a program stored in a read-only memory (ROM) 602 or a program loaded from a storage device 608 into a random access memory (RAM) 603. In the RAM 603, various programs and data required for operations of the electronic device 600 are also stored. The processing device 601, the ROM 602, and the RAM 603 are connected to each other via a bus 604. An input/output (I/O) interface 605 is also connected to the bus 604.

Generally, the following devices can be connected to the I/O interface 605: an input device 606 comprising, for example, a touch screen, touch pad, keyboard, mouse, camera, microphone, accelerometer, gyroscope, etc.; an output device 607 comprising, for example, a liquid crystal display (LCD), a speaker, a vibrator, etc. ; a storage device 608 comprising, for example, a memory card, etc.; and a communication device 609. The communication means 609 can allow the electronic device 600 to communicate with other devices wirelessly or by wire to exchange data. While Fig. 6 illustrates the electronic device 600 having various devices, it should be understood that not all illustrated devices are required to be implemented or provided. More or fewer devices can be alternatively implemented or provided. Each block shown in Fig. 6 can represent one device or can represent more devices as needed.

In particular, according to some embodiments of the present disclosure, the process described above with reference to the flow diagram can be implemented as a computer software program. For example, some embodiments of the present disclosure comprise a computer program product that comprises a computer program carried on a computer-readable medium, the computer program comprising program code for performing the method illustrated by the flow diagram. In some such embodiments, the computer program can be downloaded and installed from a network through the communication device 609, or installed from the storage device 608, or installed from the ROM 602. The computer program, when executed by the processing device 601, performs the above functions defined in the method according to some embodiments of the present disclosure.

It should be noted that the computer-readable medium described in some embodiments of the present disclosure can be a computer-readable signal medium or a computer-readable storage medium or any combination of the above two. The computer-readable storage medium can be, for example, but is not limited to, an electronic, magnetic, optical, electromagnetic, infrared, or semiconductor system, apparatus, or device, or any combination of the above. More specific examples of the computer-readable storage medium can comprise, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In some embodiments of the present disclosure, the computer-readable storage medium can be any tangible medium having thereon contained or stored a program for use by or in conjunction with an instruction execution system, apparatus, or device. In some embodiments of the present disclosure, however, the computer-readable signal medium can comprise a data signal propagated in baseband or as part of a carrier wave, in which computer-readable program code is carried. Such a propagated data signal can take a variety of forms, comprising, but not limited to, an electro-magnetic signal, an optical signal, or any suitable combination of the above. The computer-readable signal medium can also be any computer-readable medium other than the computer-readable storage medium, and the computer-readable signal medium can send, propagate, or transmit a program for use by or in conjunction with an instruction execution system, apparatus, or device. Program code contained on the computer-readable medium can be transmitted using any appropriate medium, comprising but not limited to: a wire, an optical cable, RF (Radio Frequency), etc., or any suitable combination of the above.

In some implementations, a client and a server can communicate using any currently known or future developed network protocol, such as HTTP (HyperText Transfer Protocol), and can be interconnected with any form or medium of digital data communication (for example, a communication network). An Example of the communication network comprises a local area network ("LAN"), a wide area network ("WAN"), an internet (for example, the Internet), and a peer-to-peer network (for example, an ad hoc peer-to-peer network), as well as any currently known or future developed network.

The above computer-readable medium can be contained in the above electronic device; or can exist alone and not be assembled into the electronic device. The above computer-readable medium has thereon carried one or more programs which, when executed by the electronic device, cause the electronic device to: display a page in which a touch area and at least one non-touch area adjacent to the touch area are comprised, wherein the at least one non-touch area does not respond to a preset touch operation and the touch area is used for displaying a target object; in response to detecting a touch operation in the touch area, display the target object in the touch area in a first preset style.

Computer program code for performing operations in some embodiments of the present disclosure can be written in one or more programming languages or any combination thereof, wherein the programming language comprises an object-oriented programming language such as Java, Smalltalk, C++, and a conventional procedural programming language such as the "C" programming language or a similar programming language. The program code can be executed entirely on a user's computer, partly on the user's computer, as a stand-alone software package, partly on the user's computer and partly on a remote computer or entirely on the remote computer or server. In a scenario in which the remote computer is involved, the remote computer can be connected to the user's computer through any type of network, comprising a local area network (LAN) or a wide area network (WAN), or can be connected to an external computer (for example, through the Internet using an Internet service provider).

The flow diagrams and block diagrams in the accompanying drawings illustrate the possibly implemented architecture, functions, and operations of the systems, methods and computer program products according to various embodiments of the present disclosure. In this regard, each block in the flow diagrams or block diagrams can represent one module, program segment, or portion of code, which comprises one or more executable instructions for implementing the specified logical functions. It should also be noted that, in some alternative implementations, the functions noted in the blocks can occur in a different order from the order noted in the drawings. For example, two blocks shown in succession can, in fact, be executed substantially concurrently, or the blocks can sometimes be executed in a reverse order, which depends upon functions involved. It will also be noted that each block of the block diagrams and/or flow diagrams, and a combination of blocks in the block diagrams and/or flow diagrams, can be implemented by a special-purpose hardware-based system that perform the specified functions or operations, or by a combination of special-purpose hardware and computer instructions.

The units described in some embodiments of the present disclosure can be implemented by software or hardware. The described units can also be provided in the processor, which can, for example, be described as: a processor comprising a display unit. Names of these units, in some cases, do not constitute limitations on the units themselves, for example, a receiving unit can also be described as a "unit for displaying a page".

The functions described above herein can be performed, at least in part, by one or more hardware logic components. For example, without limitation, an exemplary type of the hardware logic component that can be used comprises: a field programmable gate array (FPGA), an application specific integrated circuit (ASIC), an application specific standard products (ASSP), a system on chip (SOC), a complex programmable logic device (CPLD), and the like.

According to one or more embodiments of the present disclosure, there is provided a target object display method, comprising: displaying a page in which a touch area and at least one non-touch area adjacent to the touch area are comprised, wherein the at least one non-touch area does not respond to a preset touch operation, and the touch area is used for displaying a target object; and in response to detecting a touch operation in the touch area, displaying the target object in the touch area in a first preset style.

According to one or more embodiments of the present disclosure, the above method further comprises: in response to detecting the touch operation in the touch area, hiding a target element in the page.

According to one or more embodiments of the present disclosure, the target object is a progress bar; and the method further comprises: in response to detecting a swiping operation in the touch area and a swiping distance being greater than a preset threshold, updating a current progress of the progress bar based on position information of a current swiping contact point.

According to one or more embodiments of the present disclosure, a video playing area is comprised in the page; and the method further comprises: in response to detecting a preset operation in the video playing area, displaying the target object in the touch area in the first preset style.

According to one or more embodiments of the disclosure, a tab switching control is further comprised in the page, and the progress bar has a higher priority level than the tab switching control.

According to one or more embodiments of the present disclosure, there is provided a target object display apparatus, comprising: a display unit configured to display a page in which a touch area and at least one non-touch area adjacent to the touch area are comprised, wherein the at least one non-touch area does not respond to a preset touch operation, and the touch area is used for displaying a target object; and the display unit further configured to display, in response to detecting a touch operation in the touch area, the target object in the touch area in a first preset style.

According to one or more embodiments of the present disclosure, the apparatus further comprises: an element hiding unit configured to hide, in response to detecting the touch operation in the touch area, a target element in the page.

According to one or more embodiments of the present disclosure, the target object is a progress bar; and the apparatus further comprises: an updating unit configured to update, in response to detecting a swiping operation in the touch area and a swiping distance being greater than a preset threshold, a current progress of the progress bar based on position information of a current swiping contact point.

According to one or more embodiments of the present disclosure, a video playing area is comprised in the page; and the display unit is further configured to display, in response to detecting a preset operation in the video playing area, the target object in the touch area in the first preset style.

According to one or more embodiments of the disclosure, a tab switching control is further comprised in the page, and the progress bar has a higher priority level than the tab switching control.

According to one or more embodiments of the present disclosure, there is provided an electronic device, comprising: one or more processors; and a storage device having thereon stored one or more programs which, when executed by one or more processors, cause the one or more processors to implement the method according to any of the embodiments above.

According to one or more embodiments of the present disclosure, there is provided a computer-readable medium having thereon stored a computer program, wherein the program, when executed by a processor, implements the method according to any of the embodiments above.

The foregoing description is only some preferred embodiments of the present disclosure and is illustrative of the applied technical principles. It should be appreciated by those skilled in the art that the invention scope involved in the embodiments of the present disclosure is not limited to the technical solution formed by the specific combination of the above technical features, but also encompasses another technical solution formed by an arbitrary combination of the above technical features or their equivalent features without departing from the inventive concepts. For example, a technical solution is formed by replacing the above features with technical features having functions similar to those disclosed (but not limited to) in the embodiments of the present disclosure.

## Claims

1. A target object display method, comprising:
displaying a page in which a touch area and at least one non-touch area adjacent to the touch area are comprised, wherein the at least one non-touch area does not respond to a preset touch operation, and the touch area is used for displaying a target object; and
displaying the target object in the touch area in a first preset style, in response to detecting a touch operation in the touch area.

2. The method according to claim 1, further comprising:
hiding a target element in the page, in response to detecting the touch operation in the touch area.

3. The method according to claim 1 or 2, wherein the target object is a progress bar; and
the method further comprises:
updating a current progress of the progress bar based on position information of a current swiping contact point, in response to detecting a swiping operation in the touch area and a swiping distance being greater than a preset threshold.

4. The method according to any of claims 1 to 3, wherein a video playing area is comprised in the page; and
the method further comprises:
displaying the target object in the touch area in the first preset style, in response to detecting a preset operation in the video playing area.

5. The method according to claim 3, wherein a tab switching control is further comprised in the page, and the progress bar has a higher priority level than the tab switching control.

6. A target object display apparatus, comprising:
a display unit configured to display a page in which a touch area and at least one non-touch area adjacent to the touch area are comprised, wherein the at least one non-touch area does not respond to a preset touch operation, and the touch area is used for displaying a target object; and
the display unit further configured to display, in response to detecting a touch operation in the touch area, the target object in the touch area in a first preset style.

7. The apparatus according to claim 6, wherein the apparatus further comprises:
an element hiding unit configured to hide, in response to detecting the touch operation in the touch area, a target element in the page.

8. The apparatus according to claim 6 or 7, wherein the target object is a progress bar; and
the apparatus further comprises:
an updating unit configured to update, in response to detecting a swiping operation in the touch area and a swiping distance being greater than a preset threshold, a current progress of the progress bar based on position information of a current swiping contact point.

9. The apparatus according to any of claims 6 to 8, wherein a video playing area is comprised in the page; and
the display unit is further configured to display, in response to detecting a preset operation in the video playing area, the target object in the touch area in the first preset style.

10. The apparatus according to claim 8, wherein a tab switching control is further comprised in the page, and the progress bar has a higher priority level than the tab switching control.

11. An electronic device, comprising:
one or more processors; and
a storage device having thereon stored one or more programs which, when executed by one or more processors, cause the one or more processors to implement the method according to any of claims 1 to 5.

12. A computer-readable medium having thereon stored a computer program, wherein the program, when executed by a processor, implements the method according to any of claims 1 to 5.

13. A computer program product, comprising a computer program which, when executed, is used for implementing the target object display method according to any of claims 1 to 5.
